# EUROPEAN PATENT APPLICATION

(11) **EP 2 597 885 A1**
(43) Date of publication of application: **29.05.2013**
(21) Application number: 11846939.4
(22) Date of filing: 07.09.2011
(51) Int. Cl.: H04N 21/43

(54) **METHOD AND DEVICE FOR PLAYING STREAM MEDIA VIDEO CONTENT**

(30) Priority: 09.12.2010 CN 201010581691
(71) Applicant: Huawei Technologies Co., Ltd., Shenzhen, Guangdong 518129 (CN)
(72) Inventor: GAN, Mo, Shenzhen Guangdong 518129 (CN)
(74) Representative: Epping - Hermann - Fischer
(86) International application number: PCT/CN2011/079403
(87) International publication number: WO 2012/075842

(57) **Abstract**

The present invention discloses a method and an apparatus for playing stream media video contents, which relate to the video play technology. The objective of the present invention is to solve the problem in the prior art that an image which a user expects to see cannot be rapidly, intuitively and accurately located during video location seek. A technical solution of the present invention is a method for playing stream media video contents. The method includes: obtaining video location seek time of stream media video contents to be played; obtaining a target I frame corresponding to the video location seek time from I frames contained in the stream media video contents to be played; and playing the target I frame. The method and the apparatus for playing stream media video contents provided by the embodiments of the present invention are applicable to multiple terminals such as computers, mobile phones etc.

## Description

### FIELD OF THE INVENTION

The present invention relates to a video play technology, and in particular, to a method and apparatus for playing stream media video contents.

### BACKGROUND

Internet videos refer to services which are decoded and played by a terminal player by deploying a media server or a download server of the internet and transmitting internet video contents to the terminal player when the terminal player requests for the internet video contents. A user can experience different video play services such as on-demand, direct broadcast etc. on multiple terminals such as personal computers, mobile phones etc.

With the development of the internet video play technology, multiple network transmission protocol specifications can be used to implement transmission of the video contents between the server and the terminal player. Wherein, the HTTP Streaming has become a mainstream network transmission protocol gradually, and there are multiple HTTP Streaming specifications at present, for example, all of Microsoft, Apple, 3GPP, OIPF etc. define respective HTTP Streaming specifications. No matter for which network transmission protocol specification, in order to implement dynamic adjustment of a code rate, the video contents are required to be stored at the server side in a form of fragmentations; and in addition, when the stream media video contents are played, the server and the terminal player are similar in the interaction.

The method for playing stream media video contents in the prior art is as follows: a terminal player transmitting a request for a description file, and a server receiving the request for the description file and returning the corresponding description file; after receiving the description file, the terminal player requesting a fragmentation corresponding to the description file from the server, and the server receiving the request for the corresponding fragmentation, and returning the corresponding fragmentation; and the terminal player decoding and playing the corresponding fragmentation. Wherein, the description file describes information such as files to which different code rates and different resolutions correspond, and fragmentations of which each description file is comprised, as well as starting time, a duration, a corresponding Uniform/Universal Resource Locator (URL) for play and download of each fragmentation etc.

In the process of implementing the present invention, the inventor discovers that during a video location seek operation in the prior art, after a user pushes a time progress bar, a time point to which the current time progress bar is dragged can be seen; however, an image of the time point to which the current time progress bar is dragged can not be seen; and after the user looses the time progress bar, during transmitting a request for a corresponding fragmentation and receiving the corresponding fragmentation, the image of the time point to which the current time progress bar is dragged still can not be seen, and only when the corresponding fragmentation is obtained due to the request, the image of the time point to which the current time progress bar is dragged can be seen. Therefore, the image which the user expects to see can be located only if he/she needs to try continuously.

### SUMMARY

The embodiments of the present invention provide a method and apparatus for playing stream media video contents, which can locate the image which the user expects to see rapidly, intuitively and accurately during the video location seek.

On one aspect, a method for playing stream media video contents is provided, which comprises obtaining video location seek time of stream media video contents to be played; obtaining a target I frame corresponding to the video location seek time from I frames contained in the stream media video contents to be played; and playing the target I frame.

On another aspect, a method for playing stream media video contents is provided, which comprises obtaining service information for video play, wherein, the service information comprises preview information and multi-section information of the stream media video contents; and obtaining I frames contained in the stream media video contents to be played according to the service information for the video play; and playing the I frames.

On another aspect, an apparatus for playing stream media video contents is provided, which comprises:

A video location seek time obtaining module for obtaining video location seek time of stream media video contents to be played;

A target I frame obtaining module for obtaining a target I frame corresponding to the video location seek time obtained by the video location seek time obtaining module from I frames contained in the stream media video contents to be played; and

A target I frame playing module for playing the target I frame obtained by the target I frame obtaining module.

On another aspect, an apparatus for playing stream media video contents is provided, which comprises:

A service information obtaining module for obtaining service information for video play, wherein, the service information comprises preview information and multi-section information of the stream media video contents; and

A second I frame obtaining module for obtaining I frames contained in the stream media video contents to be played according to the service information for the video play, which is obtained by the service information obtaining module; and

A second playing module for playing the I frames obtained by the second I frame obtaining module.

The method and apparatus for playing stream media video contents provided by the embodiments of the present invention make the terminal player not only be able to see the time point to which the time progress bar is dragged, but also be able to see the image of the time point during the video location seek by obtaining and playing the target I frame to which the video location seek time corresponds, thus being able to locate the image which the user expects to see rapidly, intuitively and accurately. The embodiments of the present invention solve the problem in the prior art that during the video location seek, after a user pushes a time progress bar, only a time point to which the current time progress bar is dragged can be seen; however, an image of the time point to which the current time progress bar is dragged can not be seen; and there is a certain delay between the time when the user looses the time progress bar and the time when the image of the time point to which the current time progress bar is dragged is seen, and the user can locate the image which he/she expects to see only if he/she needs to try continuously.

### BRIEF DESCRIPTION OF THE DRAWINGS

Fig. 1 is a flowchart of a method for playing stream media video contents provided by embodiment one of the present invention;

Fig. 2 is a flowchart of a method for playing stream media video contents provided by embodiment two of the present invention;

Fig. 3 is a flowchart of a method for playing stream media video contents provided by embodiment three of the present invention;

Fig. 4 is a structural diagram of an apparatus for playing stream media video contents provided by embodiment four of the present invention;

Fig. 5 is a structure diagram of a target I frame obtaining module in the apparatus for playing stream media video contents provided by embodiment four of the present invention as illustrated in Fig. 4;

Fig. 6 is structure diagram two of the apparatus for playing stream media video contents provided by embodiment four of the present invention;

Fig. 7 is a structure diagram of a first I frame obtaining module in the apparatus for playing stream media video contents provided by embodiment four of the present invention as illustrated in Fig. 6;

Fig. 8 is structure diagram three of the apparatus for playing stream media video contents provided by embodiment four of the present invention; and

Fig. 9 is a structure diagram of an apparatus for playing stream media video contents provided by embodiment five of the present invention.

### DETAILED DESCRIPTION

The technical solutions in the embodiments of the present invention will be described clearly and completely in combination with accompanying drawings in the embodiments of the present invention hereinafter. Obviously, the described embodiments are merely a part of the embodiments of the present invention, instead of being all of the embodiments. Based on the embodiments in the present invention, all other embodiments obtained in the premise that no creative working is made by a person ordinary in the art belong to the technical scope protected by the present invention.

In order to solve the problem in the prior art that an image which a user expects to see can not be located rapidly, intuitively and accurately during video location seek, the embodiments of the present invention provide a method and an apparatus for playing stream media video contents.

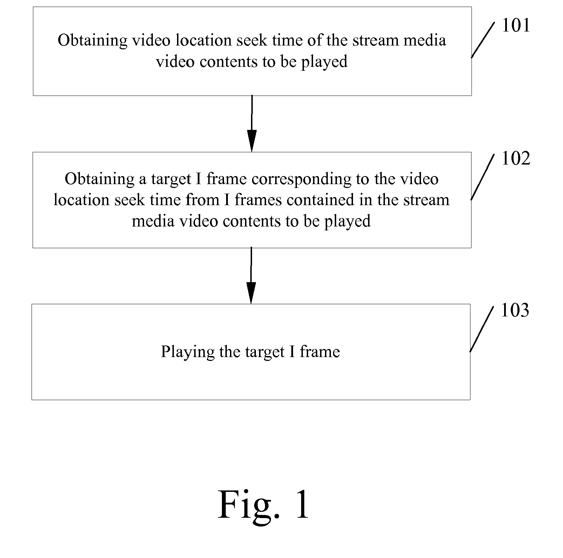

As shown in Fig. 1, a method for playing stream media video contents provided by embodiment one of the present invention comprises:

Step 101, obtaining video location seek time of the stream media video contents to be played.

In the present embodiment, in the process of playing the stream media video contents to be played or pausing the stream media video contents, a terminal player can implement a video location seek operation, and perform step 101 at this time, to obtain the video location seek time of the stream media video contents to be played.

Step 102, obtaining a target I frame corresponding to the video location seek time from I frames contained in the stream media video contents to be played.

In the present embodiment, obtaining the I frame corresponding to the video location seek time in step 102 can comprise obtaining the target I frame corresponding to the video location seek time directly from the server; or pre-obtaining all I frames contained in the stream media video contents to be played, buffering the I frames locally, and obtaining the target I frame corresponding to the video location seek time locally.

Step 103, playing the target I frame.

In the present embodiment, if a user performs a video location seek operation, after pushing a time progress bar, the user can obtain the video location seek time, obtain the target I frame corresponding to the video location seek time according to the video location seek time, and play the target I frame, and the terminal player can not only display a time point to which the current time progress bar is dragged, but also can display an image of the time point to which the current time progress bar is dragged, thus facilitating the user to perform the video location seek operation, and being able to locate the image which the user expects to see rapidly, intuitively and accurately.

The method for playing stream media video contents provided by the embodiments of the present invention make the terminal player not only be able to see the time point to which the time progress bar is dragged, but also be able to see the image of the time point during the video location seek, by obtaining and playing the target I frame to which the video location seek time corresponds, thus being able to locate the image which the user expects to see rapidly, intuitively and accurately. The embodiments of the present invention solve the problem in the prior art that during the video location seek, after a user pushes a time progress bar, only a time point to which the current time progress bar is dragged can be seen; however, an image of the time point to which the current time progress bar is dragged can not be seen; and there is a certain delay between the time when the user looses the time progress bar and the time when the image of the time point to which the current time progress bar is dragged is seen, and the user can locate the image which he/she expects to see only if he/she needs to try continuously.

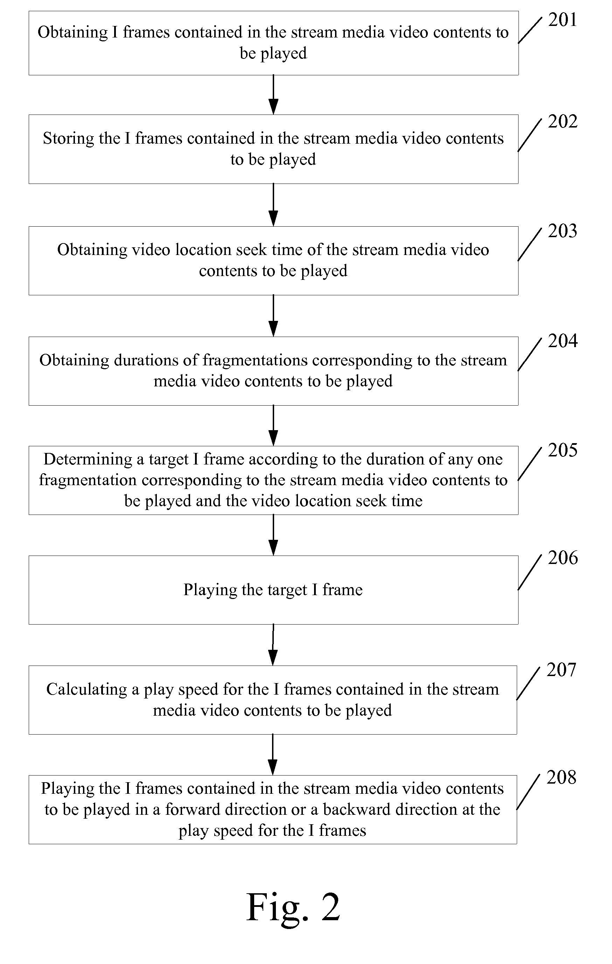

In order to make those skilled in the art can implement the method for playing stream media video contents provided by embodiment one of the present invention, in embodiment two of the present invention, the method for playing stream media video contents provided by embodiment one of the present invention is further improved, and as shown in Fig. 2, the method for playing stream media video contents provided by embodiment two of the present invention can comprise specific steps as follows:

Step 201, obtaining I frames contained in the stream media video contents to be played.

In the present embodiment, the step 201 can be performed before the terminal player starts to play the stream media video contents, to obtain the I frames contained in the stream media video contents to be played; or the step 201 can also be performed within an idle time between the time when the terminal buffers enough fragmentations and the time when the next fragmentation is buffered, to obtain the I frames contained in the stream media video contents to be played. In the present embodiment, for the step 201, all the I frames contained in the stream media video contents to be played may not be downloaded at one time.

For example, in the present embodiment, a number of subsequent fragmentations transmitted by the server, which are received by the terminal player is set as 2, and when the user plays a n^{th} fragmentation, the terminal player controls to not receive a n+3^{th} fragmentation immediately after receiving a n+2^{th} fragmentation, and will continue to receive the n+3^{th} fragmentation only after the user starts to play a n+1^{th} fragmentation. There is an idle time between the time when receiving the n+2^{tn} fragmentation and the time when receiving the n+3^{th} fragmentation. If in the current step 201, an I frame of a n+m^{th} fragmentation has been received, after the current n^{th} fragmentation is played completely and the n+3^{th} fragmentation transmitted by the server is received completely, an frame of a n+m+1^{th} fragmentation transmitted by the server continues to be received.

In the present embodiment, in order to save the time for the terminal player to obtain the I frames, step 201 can only obtain an initial I frame contained in the stream media video contents to be played. The time for obtaining the initial I frame contained in the stream media video contents to be played is relatively short. For the current family network bandwidth, by example of a transmission rate being 500 kilobits per second (kbps) during one hour, if there is one fragmentation every 10 seconds, a total size of the I frames of all the fragmentations is 2.25 Megabytes (M), and it needs 36 seconds to receive the I frames of all the segmentations completely, which is a short time. Even if considering that it needs to transmit a request for a description file many times to request for different fragmentations, the I frames of all the fragmentations can still be received within a short time.

In the present embodiment, obtaining the I frames contained in the stream media video contents to be played in step 201 can comprise:

First, transmitting I frame request information to the server, wherein, the I frame request information comprises a Uniform/Universal Resource Locator (URL) for identifying fragmentations to which the I frames belong and a byte range corresponding to the I frames.

In the present embodiment, the URL can make the server locate the fragmentations to which the I frames belong, and the byte range corresponding to the I frames can make the terminal player obtain the required I frames from the fragmentations.

Second, receiving the I frames contained in the stream media video contents corresponding to the I frame request information transmitted by the server.

Step 202, storing the I frames contained in the stream media video contents to be played.

In the present embodiment, in step 202, a separate I frame file can be used to store the I frames contained in the stream media video contents to be played; or the I frames contained in the video contents to be played and the stream media video contents to be played can be stored as the same file.

Step 203, obtaining video location seek time of the stream media video contents to be played.

In the present embodiment, in the process of playing the stream media video contents to be played or pausing the stream media video contents, the terminal player can implement the video location seek operation, and perform step 203 at this time, to obtain the search time of the stream media video contents to be played.

Step 204, obtaining a duration of any one fragmentation corresponding to the stream media video contents to be played.

In the present embodiment, the stream media video contents to be played can correspond to multiple fragmentations, and the durations of various fragmentations are generally the same. Therefore, step 204 can obtain a duration of any one fragmentation corresponding to the stream media video contents to be played.

Step 205, determining the target I frame according to the durations of the fragmentations corresponding to the stream media video contents to be played and the video location seek time.

In the present embodiment, step 205 can determine the target I frame by dividing the durations of the fragmentations corresponding to the stream media video contents to be played by the video location seek time.

Step 206, playing the target I frame.

For the method for playing stream media video contents provided by the present embodiment, the above steps can perform the video location seek operation, and during the video location seek, not only the time point to which the time progress bar is dragged can be seen, but also the image corresponding to the time to which the time progress bar is dragged can be seen. In order to make the present embodiment be able to perform a fast forward or fast backward operation, the present embodiment can further comprise:

Step 207, calculating a play speed for the I frames contained in the stream media video contents to be played.

In the present embodiment, for step 207, a multiple of the speed for playing the video during the fast forward or the fast backward operation can be first obtained, and the duration of any one fragmentation corresponding to the stream media video contents to be played can be obtained, and then the play speed for the I frames contained in the stream media video contents to be played can be obtained by dividing the multiple of the speed by the duration.

Step 208, playing the I frames contained in the stream media video contents to be played in a forward direction or a backward direction at the play speed.

In the present embodiment, when a user implements the fast forward operation, the terminal player plays the I frames contained in the stream media video contents to be played in the forward direction at the play speed calculated in step 207, to perform the fast forward operation in the play of the stream media video contents; and when a user implements the fast backward operation, the terminal player plays the I frames contained in the stream media video contents to be played in the backward direction at the play speed calculated in step 207, to perform the fast backward operation in the play of the stream media video contents.

In the present embodiment, the step 208 is performed to play the I frames contained in the stream media video contents to be played in a forward direction or a backward direction at the play speed for the I frames contained in the stream media video contents to be played which is calculated in step 207, and normal play information can be obtained and the stream media video contents are played at a normal speed when the image which the user needs to see is achieved.

If a user performs a video location seek operation, after pushing a time progress bar, the user can obtain the video location seek time, obtain an I frame corresponding to the video location seek time according to the video location seek time, and play the I frame, and the terminal player can not only display a time point to which the current time progress bar is dragged, but also can display an image of the time point to which the current time progress bar is dragged, thus facilitating the user to perform the video location seek operation, and being able to locate the image which the user expects to see rapidly, intuitively and accurately.

In the present embodiment, during the video location seek, only the target I frame is obtained instead of obtaining all the I frames contained in the video contents, and during performing the video location seek, not only the time point to which the time progress bar is dragged can be seen, but also the image of the time point can be seen.

The method for playing stream media video contents provided by the embodiments of the present invention make the terminal player not only be able to see the time point to which the time progress bar is dragged, but also be able to see the image of the time point during the video location seek by obtaining and playing the target I frame to which the video location seek time corresponds from the I frames contained in the stream media video contents to be played, thus being able to locate the image which the user expects to see rapidly, intuitively and accurately. The embodiments of the present invention solve the problem in the prior art that during the video location seek, after a user pushes a time progress bar, only a time point to which the current time progress bar is dragged can be seen; however, an image of the time point to which the current time progress bar is dragged can not be seen; and there is a certain delay between the time when the user looses the time progress bar and the time when the image of the time point to which the current time progress bar is dragged is seen, and the user can locate the image which he/she expects to see only if he/she needs to try continuously.

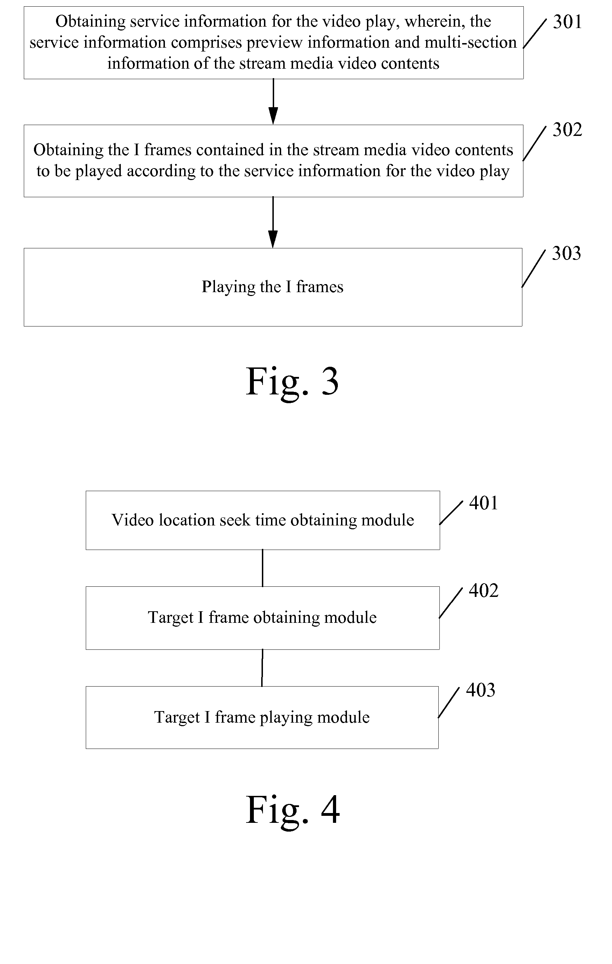

In order to make the method for playing stream media video contents provided by the embodiments of the present invention further be able to be used for other related services, such as preview services of the stream media video contents and multi-section services of the stream media video contents, the method for playing stream media video contents provided by embodiment three of the present invention, as shown in Fig. 3, can further comprise:

Step 301, obtaining service information for video play, wherein, the service information comprises preview information and multi-section information of the stream media video contents to be played.

In the present embodiment, when browsing an introduction of the video contents on the internet, a user can preview the interested video contents, and obtain the preview information of the interested stream media video contents in step 301. Alternatively, the user can perform step 301 according to the video contents required to be played to obtain the multi-section information for the video play. The multi-section information can include a number of sections into which the video contents to be played are expected by the user to be divided.

Step 302, obtaining the I frames contained in the stream media video contents to be played according to the service information for the video play.

In the present embodiment, the preview information can comprise: a preview indication of the stream media video contents, and the stream media video contents corresponding to the preview indication are the stream media video contents to be played; and the multi-section information can comprise: a total duration of the stream media video contents, and a number of sections into which the stream media video contents are divided. Step 302 can determine the stream media video contents to be played according to the preview information of the stream media video contents, thus obtaining the I frames contained in the stream media video contents to be played, and in order to save the time for the terminal player to obtain the I frames, only obtaining an initial I frame of the fragmentations corresponding to the stream media video contents to be played is also possible. Alternatively, step 302 can determine the fragmentations corresponding to the video contents contained in various sections according to the multi-section information of the stream media video contents, and obtain the I frames of the various sections according to the fragmentations, or can also only obtain the initial I frame of the various sections for preview by the user.

In the present embodiment, in step 302, the process of obtaining the I frames contained in the stream media video contents can comprise:

First, transmitting I frame request information to the server, wherein, the I frame request information comprises a URL for identifying fragmentations to which the I frames belong and a byte range corresponding to the I frames;

Second, receiving the I frames contained in the stream media video contents corresponding to the I frame request information transmitted by the server.

Step 303, playing the I frames.

In the present embodiment, after performing step 303 to play the I frames, a user can determine whether to normally play the stream media video contents according to the previewed stream media video contents or according to the preview information of a multi-section initial image.

The method for playing the stream media video contents provided by the present embodiment can implement preview services of the stream media video contents as follows: when the user previews the video contents, the terminal player may not receive the fragments of the previewed contents, and instead, only receive the I frames of the fragmentations of the previewed contents, which can be preview services of the video contents in the play of the stream media video contents; the user can determine whether to normally play the video according to the preview of an I frame file, without specifically making a preview file for the video contents to implement the preview service of the video contents. The multi-section services of the stream media video play can also be implemented as follows: dividing the video contents into multiple sections according to user requirements, making the I frame of each section into a poster, for the user to select normal play of a certain section.

The apparatus for playing stream media video contents provided by embodiment four of the present invention, as shown in Fig. 4, comprises:

A video location seek time obtaining module 401 for obtaining video location seek time of the stream media video contents to be played;

Wherein, in the present embodiment, the terminal player can implement the video location seek operation in the process of playing the stream media video contents to be played or pausing the stream media video contents, and at this time, the video location seek time obtaining module 401 is used to obtain the video location seek time of the stream media video contents to be played;

A target I frame obtaining module 402 for obtaining a target I frame corresponding to the video location seek time obtained by the video location seek time obtaining module from the I frames contained in the stream media video contents to be played;

Wherein, in the present embodiment, the target I frame obtaining module 402 can obtain the target I frame corresponding to the video location seek time from the server directly; or can also pre-obtain all I frames contained in the stream media video contents to be played, buffer the I frames locally, and obtain the target I frame corresponding to the video location seek time locally; and

A target I frame playing module 403 for playing the obtained target I frame.

In the present embodiment, if a user performs a video location seek operation, after the user pushes a time progress bar, the video location seek time obtaining module 401 can obtain the video location seek time, and the target I frame obtaining module 402 obtains a target I frame corresponding to the video location seek time according to the video location seek time, and plays the target I frame using the target I frame playing module; and the terminal player can not only display a time point to which the current time progress bar is dragged, but also can display an image of the time point to which the time progress bar is dragged, thus facilitating the user to perform the video location seek operation, and being able to locate the image which the user expects to see rapidly, intuitively and accurately.

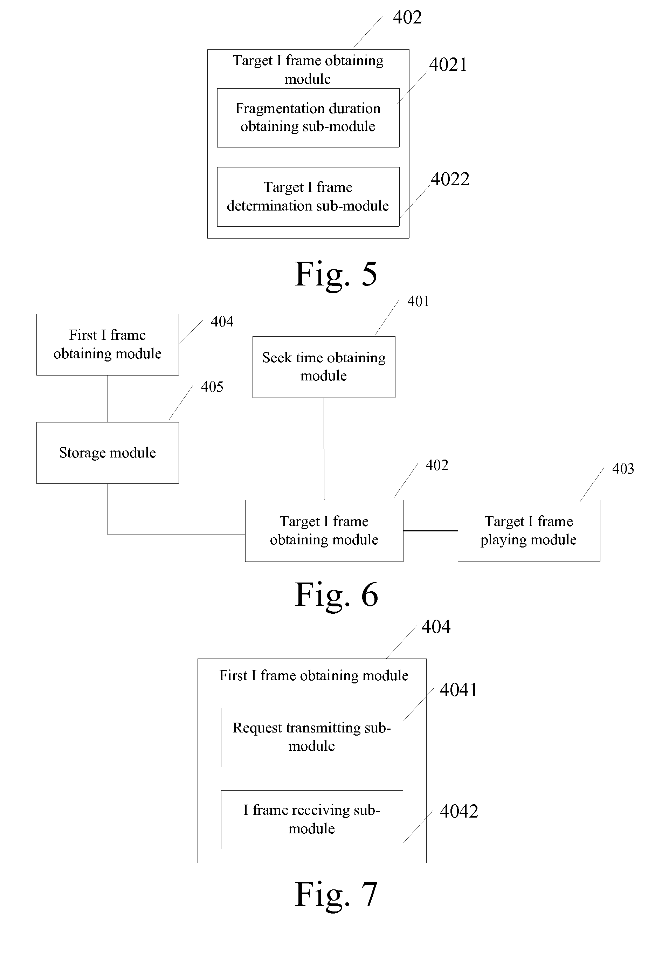

Further, as shown in Fig. 5, the target I frame obtaining module 402 can comprise:

A fragmentation duration obtaining sub-module 4021 for obtaining a duration of any one fragmentation corresponding to the stream media video contents to be played;

Wherein, in the present embodiment, the stream media video contents to be played can correspond to multiple fragmentations, and the durations of various fragmentations are generally the same. Therefore, the fragmentation duration obtaining sub-module 4021 can obtain a duration of any one fragmentation corresponding to the stream media video contents to be played, wherein, the durations of the various fragmentations are the same; and

A target I frame determination sub-module 4022 for determining the target I frame according to the durations of the fragmentations obtained by the fragmentation duration obtaining sub-module and the video location seek time;

Wherein, in the present embodiment, the target I frame determination sub-module 4022 can determine the target I frame by dividing the durations of the fragmentations corresponding to the stream media video contents to be played by the video location seek time.

Further, as shown in Fig. 6, the apparatus for playing stream media video contents provided by the present embodiment can further comprise:

A first I frame obtaining module 404 for obtaining the I frames contained in the stream media video contents to be played;

Wherein, in the present embodiment, the first I frame obtaining module 404 can obtain the I frames contained in the stream media video contents to be played before the terminal player starts to play the stream media video contents; or the first I frame obtaining module 404 can also obtain the I frames contained in the stream media video contents to be played within an idle time between the time when the terminal player buffers enough fragmentations and the time when the next fragmentation is buffered. In the present embodiment, the first I frame obtaining module 404 may not download all the I frames contained in the stream media video contents to be played at one time;

For example, in the present embodiment, a number of the received subsequent fragmentations transmitted by the server is set as 2, and when the user plays a n^{th} fragmentation, the terminal player controls to not receive a n+3^{th} fragmentation immediately after receiving a n+2^{th} fragmentation, and will continue to receive the n+3^{th} fragmentation only after the user starts to play a n+1^{th} fragmentation. There is an idle time between the time when receiving the n+2^{th} fragmentation and the time when receiving the n+3^{th} fragmentation. If having received an I frame of a n+m^{th} fragmentation, after the current n^{th} fragmentation is played completely and the n+3^{th} fragmentation transmitted by the server is received completely, the first I frame obtaining module 404 continue to receive an frame of a n+m+1^{th} fragmentation transmitted by the server.

Wherein, in the present embodiment, in order to save the time for the terminal player to obtain the I frames, the first I frame obtaining module 404 can only obtain an initial I frame contained in the stream media video contents to be played. The time for obtaining the initial I frame contained in the stream media video contents to be played is relatively short. For the current family network bandwidth, by example of a transmission rate being 500 kilobits per second (kbps) during one hour, if there is one fragmentation every 10 seconds, a total size of the I frames of all the fragmentations is 2.25 Megabytes (M), and it needs 36 seconds to receive the I frames of all the segmentations, which is a short time. Even if considering that it needs to transmit a request for a description file many times to request for different fragmentations, the I frames of all the fragmentations can still be received within a short time; and

A storage module 405 for storing the I frames contained in the stream media video contents to be played which are obtained by the I frame obtaining module;

Wherein, in the present embodiment, the storage module 405 can store the I frames contained in the stream media video contents to be played using a separate I frame file, or can store the I frames contained in the video contents to be played and the stream media video contents to be played as the same file.

Further, as shown in Fig. 7, the first I frame obtaining module 404 can further comprise:

A request transmitting sub-module 4041 for transmitting I frame request information to a server, wherein, the I frame request information comprises a URI for identifying fragmentations to which the I frames belong and a byte range corresponding to the I frames;

Wherein, in the present embodiment, the URL can make the server locate the fragmentations to which the I frames belong, and the byte range corresponding to the I frames can make the terminal player obtain the required I frames from the fragmentations; and

An I frame receiving sub-module 4042 for receiving the I frames contained in the stream media video contents corresponding to the I frame request information transmitted by the server.

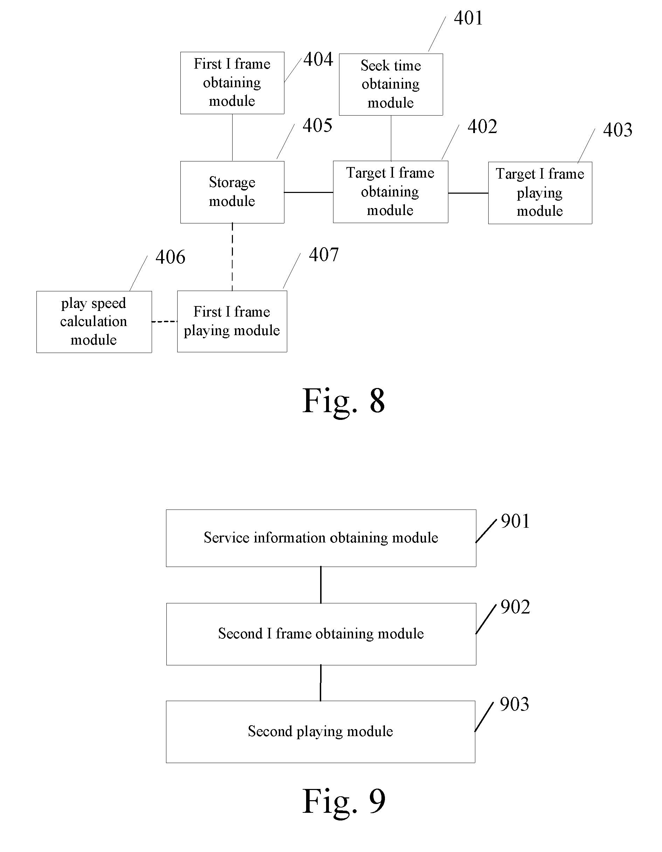

Further, in the present embodiment, in order to perform a fast forward or a fast backward operation, as shown in Fig. 8, the apparatus for playing stream media video contents provided by the present embodiment can further comprise:

A play speed calculation module 406 for calculating a play speed for the I frames contained in the stream media video contents to be played;

Wherein, in the present embodiment, the play speed calculation module 406 can comprise a first obtaining sub-module and a calculation sub-module, wherein, the first obtaining sub-module is used to obtain a multiple of the speed at which a video is played during a fast forward or fast backward operation, and obtain a duration of any one fragmentation corresponding to the stream media video contents to be played; and the calculation sub-module is used to divide the multiple of the speed by the obtained duration, to obtain the play speed for the I frames contained in the stream media video contents to be played; and

A first I frame playing module 407 for playing the I frames contained in the stream media video contents to be played in a forward direction or a backward direction at the play speed obtained by the play speed calculation module;

Wherein, in the present embodiment, when a user implements the fast forward operation, the terminal player plays the I frames contained in the stream media video contents to be played in the forward direction at the play speed calculated by the play speed calculation module 406, to perform the fast forward operation in the play of the stream media video contents; and when a user implements the fast backward operation, the terminal player plays the I frames contained in the stream media video contents to be played in the backward direction at the play speed calculated by play speed calculation module 406, to perform the fast backward operation in the play of the stream media video contents.

In the present embodiment, the first I frame playing module 407 plays the I frames contained in the stream media video contents to be played in a forward direction or a backward direction at the play speed which is calculated by the play speed calculation module 406, and normal play information can be obtained and the stream media video contents are played at a normal speed when the image which the user needs to see is achieved.

The apparatus for playing stream media video contents provided by the embodiments of the present invention make the terminal player not only be able to see the time point to which the time progress bar is dragged, but also be able to see the image of the time point during the video location seek by the target I frame obtaining module obtaining the target I frame to which the video location seek time corresponds and using the target I frame playing module to play the target I frame, thus being able to locate the image which the user expects to see rapidly, intuitively and accurately. The embodiments of the present invention solve the problem in the prior art that during the video location seek, after a user pushes a time progress bar, only a time point to which the current time progress bar is dragged can be seen; however, an image of the time point to which the current time progress bar is dragged can not be seen; and there is a certain delay between the time when the user looses the time progress bar and the time when the image of the time point to which the current time progress bar is dragged is seen, and the user can locate the image which he/she expects to see only if he/she needs to try continuously.

In order to make the apparatus for playing stream media video contents provided by the embodiments of the present invention further be able to be used for other related services, such as preview services of the stream media video contents and multi-section services of the stream media video contents, an apparatus for playing stream media video contents provided by embodiment five of the present invention, as shown in Fig. 9, can further comprise:

A service information obtaining module 901 for obtaining service information for video play, wherein, the service information comprises preview information and multi-section information of the stream media video contents;

Wherein, in the present embodiment, the service information obtaining module 901 can comprise: a preview information obtaining sub-module and a multi-section information obtaining sub-unit. Wherein, the preview information obtaining sub-module is used to obtain a preview indication of the stream media video contents, the stream media video contents corresponding to the preview indication being the stream media video contents to be played; and the multi-section information obtaining sub-module is used to obtain a total duration of the stream media video contents, and a number of sections into which the stream media video contents are divided. The service information obtaining module 901 can determine the stream media video contents to be played according to the preview information of the stream media video contents, thus obtaining the I frames contained in the stream media video contents to be played, and, in order to save the time for the terminal player to obtain the I frames, only obtaining an initial I frame of the fragmentations corresponding to the stream media video contents to be played is also possible. Alternatively, the service information obtaining module 901 can determine the fragmentations corresponding to the video contents contained in various sections according to the multi-section information of the stream media video contents, and obtain the I frames of the various sections according to the fragmentations, or can also only obtain the initial I frame of the various sections for preview by the user; and

A second I frame obtaining module 902 for obtaining I frames contained in the stream media video contents to be played according to the service information for the video play obtained by the service information obtaining module;

Wherein, in the present embodiment, the second I frame obtaining module 902 can obtain the I frames contained in the stream media video contents according to the preview information of the stream media video contents, or in order to save the time for the terminal player to obtain the I frames, only obtaining an initial I frame of the fragmentations corresponding to the stream media video contents is also possible. Alternatively, the second I frame obtaining module 902 can obtain the I frames of various sections according to the multi-section information of the stream media video contents, or can also only obtain the initial I frame of the various sections for preview by the user.

In the present embodiment, the second I frame obtaining module 902, as shown in Fig. 7, can also comprise:

A request transmitting sub-module 4041 for transmitting I frame request information to a server, wherein, the I frame request information comprises a URL for identifying fragmentations to which the I frames belong and a byte range corresponding to the I frames;

An I frame receiving sub-module 4042 for receiving the I frames contained in the stream media video contents corresponding to the I frame request information transmitted by the server; and

A second playing module 903 for playing the I frames obtained by the second I frame obtaining module.

In the present embodiment, after the second playing module 903 plays the I frames, the user can determine whether to normally play the stream media video contents according to the previewed stream media video contents or according to the preview information of a multi-section initial image.

The apparatus for playing the stream media video contents provided by the present embodiment can implement preview services of the stream media video contents as follows: when the user previews the video contents, the terminal player may not receive the fragments of the previewed contents, and instead, only receive the I frames of the fragmentations of the previewed contents, which can be preview services of the video contents in the play of the stream media video contents; the user can determine whether to normally play the video according to the preview of an I frame file, without specifically making a preview file for the video contents to implement the preview service of the video contents. The multi-section service of the stream media video play can also be implemented as follows: dividing the video contents into multiple sections according to user requirements, making the I frame of each section into a poster, for the user to select normal play of a certain section.

The method and apparatus for playing stream media video contents provided by the embodiments of the present invention make the terminal player not only be able to see the time point to which the time progress bar is dragged, but also be able to see the image of the time point during the video location seek, by obtaining and playing the target I frame to which the video location seek time corresponds, thus being able to locate the image which the user expects to see rapidly, intuitively and accurately. The embodiments of the present invention solve the problem in the prior art that during the video location seek, after a user pushes a time progress bar, only a time point to which the current time progress bar is dragged can be seen; however, an image of the time point to which the current time progress bar is dragged can not be seen; and there is a certain delay between the time when the user looses the time progress bar and the time when the image of the time point to which the current time progress bar is dragged is seen, and the user can locate the image which he/she expects to see only if he/she needs to try continuously.

The method and apparatus for playing stream media video contents provided by the embodiments of the present invention can use multiple network transmission protocols such as HTTP, HTTP Streaming, TCP, UDP etc., which is applicable to multiple terminals such as computers, mobile phones etc.

The steps of the method or algorithm described in combination with the embodiments disclosed herein can be implemented by hardware, software modules performed by processors, or a combination of the both directly. The software modules can be located in a Random Access Memory (RAM), a memory, a Read Only Memory (ROM), an electrically programmable ROM, an electrically erasable programmable ROM, a register, a hard disk, a removable disk, a CD-ROM, or any other form of storage media as known in the art.

The above description is merely the specific embodiments of the present invention, and the protection scope of the present invention is not limited thereto. All the variations or substitutions which can be easily thought of by any skilled person familiar with the present technical field within the technical scope disclosed by the present invention should be covered by the protection scope of the present invention. Therefore, the protection scope of the present invention should be based on the protection scope of the claims.

## Claims

1. A method for playing stream media video contents, which is applied to a stream media video communication system, comprising:
obtaining video location seek time of the stream media video contents to be played;
obtaining a target I frame corresponding to the video location seek time from I frames contained in the stream media video contents to be played; and
playing the target I frame.

2. The method for playing stream media video contents according to claim 1, wherein, obtaining a target I frame corresponding to the video location seek time from I frames contained in the stream media video contents to be played comprises:
obtaining a duration of any one fragmentation corresponding to the stream media video contents to be played, durations of various fragmentations being the same; and
determining the target I frame according to the durations of the fragmentations corresponding to the stream media video contents to be played and the video location seek time.

3. The method for playing stream media video contents according to claim 1, wherein, before obtaining the video location seek time of the stream media video contents to be played, the method comprises:
obtaining the I frames contained in the stream media video contents to be played; and
storing the obtained I frames contained in the stream media video contents to be played.

4. The method for playing stream media video contents according to claim 3, wherein, obtaining the I frames contained in the stream media video contents to be played comprises:
transmitting I frame request information to a server, wherein, the I frame request information comprises a Uniform/Universal Resource Locator (URL) for identifying fragmentations to which the I frames belong and a byte range corresponding to the I frames; and
receiving the I frames contained in the stream media video contents to be played corresponding to the I frame request information transmitted by the server.

5. The method for playing stream media video contents according to claim 3, wherein, storing the I frames contained in the stream media video contents to be played comprises:
storing the I frames contained in the stream media video contents to be played using an individual I frame file.

6. The method for playing stream media video contents according to claim 3, wherein, storing the I frames contained in the stream media video contents to be played comprises:
storing the I frames contained in the video contents to be played and the stream media video contents to be played as the same file.

7. The method for playing stream media video contents according to claim 1, further comprising:
calculating a play speed for the I frames contained in the stream media video contents to be played; and
playing the I frames contained in the stream media video contents to be played in a forward direction or a backward direction at the play speed.

8. The method for playing stream media video contents according to claim 7, wherein, calculating a play speed for the I frames contained in the stream media video contents to be played comprises:
obtaining a multiple of the speed at which a video is played during a fast forward operation or a fast backward operation, and obtaining a duration of any one fragmentation corresponding to the stream media video contents to be played, durations of various fragmentations being the same; and
dividing the multiple of the speed by the duration, to obtain the play speed for the I frames contained in the stream media video contents to be played.

9. A method for playing stream media video contents, comprising:
obtaining service information for video play, wherein, the service information comprises preview information and multi-section information of the stream media video contents; and
obtaining I frames contained in the stream media video contents to be played according to the service information for the video play; and
playing the I frames.

10. The method for playing stream media video contents according to claim 9, wherein,
the preview information comprises a preview indication of the stream media video contents, the stream media video contents corresponding to the preview indication are the stream media video contents to be played; and
the multi-section information comprises a total duration of the stream media video contents, and a number of sections into which the stream media video contents are divided.

11. An apparatus for playing stream media video contents, comprising:
a video location seek time obtaining module for obtaining video location seek time of stream media video contents to be played;
a target I frame obtaining module for obtaining a target I frame corresponding to the video location seek time from I frames contained in the stream media video contents to be played; and
a target I frame playing module for playing the obtained target I frame.

12. The apparatus for playing stream media video contents according to claim 11, wherein, the target I frame obtaining module further comprises:
a fragmentation duration obtaining sub-module for obtaining a duration of any one fragmentation corresponding to the stream media video contents to be played, durations of various fragmentations being the same; and
a target I frame determination sub-module for determining the target I frame according to the durations of the fragmentations obtained by the fragmentation duration obtaining sub-module and the video location seek time.

13. The apparatus for playing stream media video contents according to claim 11, further comprising:
a first I frame obtaining module for obtaining the I frames contained in the stream media video contents to be played; and
a storage module for storing the I frames contained in the stream media video contents to be played which are obtained by the first I frame obtaining module.

14. The apparatus for playing stream media video contents according to claim 13, wherein, the first I frame obtaining module comprises:
a request transmitting sub-module for transmitting I frame request information to a server, wherein, the I frame request information comprises a Uniform/Universal Resource Locator (URL) for identifying fragmentations to which the I frames belong and a byte range corresponding to the I frames; and
an I frame receiving sub-module for receiving the I frames contained in the stream media video contents to be played corresponding to the I frame request information transmitted by the server.

15. The apparatus for playing stream media video contents according to claim 11, further comprising:
a play speed calculation module for calculating a play speed for the I frames contained in the stream media video contents to be played; and
a first I frame playing module for playing the I frames contained in the stream media video contents to be played in a forward direction or a backward direction at the play speed obtained by the play speed calculation module.

16. The apparatus for playing stream media video contents according to claim 15, wherein, the play speed calculation module comprises:
a first obtaining sub-module for obtaining a multiple of the speed at which a video is played during a fast forward operation or a fast backward operation, and obtaining a duration of any one fragmentation corresponding to the stream media video contents to be played, durations of various fragmentations being the same; and
a calculation sub-module for dividing the multiple of the speed by the obtained duration, to obtain the play speed for the I frames contained in the stream media video contents to be played.

17. An apparatus for playing stream media video contents, comprising:
a service information obtaining module for obtaining service information for video play, wherein, the service information comprises preview information and multi-section information of the stream media video contents; and
a second I frame obtaining module for obtaining I frames contained in the stream media video contents to be played according to the obtained service information for the video play; and
a second playing module for playing the obtained I frames.

18. The apparatus for playing stream media video contents according to claim 17, wherein, the service information obtaining module comprises:
a preview information obtaining sub-module for obtaining a preview indication of the stream media video contents; and
a multi-section information obtaining sub-module for obtaining a total duration of the stream media video contents, and a number of sections into which the stream media video contents are divided.
